# EUROPÄISCHE PATENTSCHRIFT

(11) **EP 3 742 325 B1**
(45) Veröffentlichungstag und Bekanntmachung des Hinweises auf die Patenterteilung: **04.08.2021**
(21) Anmeldenummer: 19176263.2
(22) Anmeldetag: 23.05.2019
(51) Int. Cl.: G06F 21/86, G06F 1/18, H05K 5/02, G07C 9/00, H05K 7/14

(54) **SICHERUNGSSERVER**
BACKUP SERVER
SERVEUR DE SAUVEGARDE

(43) Veröffentlichungstag der Anmeldung: 25.11.2020
(73) Patentinhaber: Wurm Leasing GmbH, 85551 Kirchheim (DE)
(72) Erfinder: Wurm, Johannes, 85551 Kirchheim (DE)
(74) Vertreter: Neymeyr, Ulrich Theodor Paul

(56) Entgegenhaltungen:
- EP-A1- 0 724 380
- JP-A- H0 923 072
- US-A1- 2004 236 988
- US-A1- 2007 106 713
- US-A1- 2011 267 768
- US-B1- 7 773 375

## Beschreibung

Die vorliegende Erfindung betrifft einen Sicherungsserver zum Sichern von Daten. Die Sicherung von Daten in Firmen bzw. Firmennetzwerken ist eine wichtige Aufgabe um im Fall von Hardwarefehlern, wie einem Crash einer Festplatte oder im Fall von Virenbefall oder sonstiger digitaler Schadsoftware, eine Sicherung der Firmendaten zu haben, um damit die Softwareinfrastruktur wieder herstellen zu können. Für eine derartige Sicherung der Daten gibt es bereits eine Vielzahl von unterschiedlichen Lösungen. Der nächste Stand der Technik wird im Patent US2007106713 offenbart.

So können bspw. diese Daten in der Cloud, also auf Servern, die im Internet stehen, gespeichert werden. Bei einer derartigen Sicherung stellt sich aber stets die Frage nach der Zuverlässigkeit der Sicherung. So dürfen die Daten nicht für Dritte einsehbar sein. Dritte dürfen keine Möglichkeit haben, diese Daten zu verändern. Und die Daten müssen so verfügbar sein, dass sie einfach wieder auf dem eigenen Server aufgespielt werden können, wenn dies benötigt sein sollte. Gerade bei der Frage der Einsehbarkeit und Manipulierbarkeit haben Server in der Cloud strukturelle Probleme. So haben in vielen Fällen Firmen gerade mittlerer Größe einen Sicherungsserver unmittelbar neben den Hauptdatenservern stehen. Dabei besteht aber die Gefahr, dass bei einer Vielzahl von Störungen, sowohl der Hauptdatenserver, wie auch der oder die Sicherungsserver gestört werden können. Beispielsweise kann im Fall eines Wasserschadens, entweder nach einer Überflutung oder Löschwasser nach einem Brand sowohl die Hauptdatenserver, wie auch die Sicherungsserver in Mitleidenschaft gezogen werden. Deshalb werden Sicherungsserver häufig auch in gesonderten Gebäuden angeordnet. In beiden letzteren Fällen kann es aber, nicht zuletzt durch die räumliche Entfernung, zu Manipulationen der Sicherungsserver bis hin zu deren Diebstahl kommen.
Somit stellt sich die Aufgabe der vorliegenden Erfindung, ein neues Konzept für Sicherungsserver und einen entsprechenden Sicherungsserver bereitzustellen, bei denen ein hohes Maß an Datensicherheit gewährleistet wird und die Daten sicher unter Kontrolle gehalten werden können und dabei die Datensicherung einfach durchgeführt werden kann.

Diese Aufgabe wird mit einem Sicherungsserver mit den Merkmalen des Anspruchs 1 gelöst. Bevorzugte Weiterbildungen sind Gegenstand der abhängigen Ansprüche.

Bei einem Sicherungsserver zum Sichern von Daten mit zumindest einem Datenträger sind die Daten speicherbar und abrufbar. Er umfasst bevorzugt einen Energiespeicher zum Speichern von elektrischer Energie für den Fall einer Unterbrechung der Stromversorgung. Dabei umfasst der Sicherungsserver ein Gehäuse, welches an einer Seite, bevorzugt der Oberseite, einen offenbaren Deckel aufweist und die anderen Seiten sind flüssigkeitsdicht und bevorzugt untrennbar miteinander verbunden. Bevorzugt können, abgesehen vom Deckel des Gehäuses, alle Gehäuseseiten miteinander verschweißt oder verlötet sein. Der Deckel kann bspw. auch an einer seitlichen Position oder unteren Lage des Gehäuses angeordnet sein. Flüssigkeitsdicht soll insbesondere mindestens eine Dichtigkeit von 1 bar Druck bezeichnen. Hiermit wird ein Server geschaffen, der auch bei einem Wassereinbruch bis zur Oberkante des unteren Gehäuseteils sicher vor der Feuchtigkeit geschützt ist. Ein Server verbraucht zwar elektrische Energie, die in Wärme umgewandelt wird und herkömmlich durch Belüftungsöffnungen an die Umgebung abgegeben wird. Es wurde allerdings erkannt, dass eine hinreichende Wärmeabgabe durch die (geschlossene) Wand des Gehäuses erzielt werden kann und, dass die Vorteile des Schutzes der Elektronik gegen Störeinflüsse, wie Wasser, höher zu gewichten sind, als die möglichst einfache Wärmeableitung.

Vorteilhaft ist, wenn der Sicherungsserver keine Bedienelemente, wie Ein- oder Ausschaltbetätiger aufweist, die an einer Außenseite des Sicherungsservers angeordnet sind. Ferner umfasst der Sicherungsserver bevorzugt keine Feedbackelemente des Sicherungsservers, wie Leuchten oder Anzeigen. Zunächst bedeutet jegliches dieser Bedienelemente eine potentielle Schwächung der Dichtigkeit des Gehäuses und es wurde erkannt, dass der Sicherungsserver als eine autark und unabhängig arbeitende Maschine verwendbar ist, die auch ohne derartige Elemente auskommt.

Vorteilhaft ist ferner, wenn der Sicherungsserver einen Verriegelungsmechanismus umfasst, um den Deckel in einer verriegelnden Position zu halten. Dabei sind insbesondere keine an der Außenseite des Sicherungsservers sichtbare Verbindungselemente, wie insbesondere Schrauben oder Haken im Einsatz. Zudem oder alternativ sind keine an der Außenseite des Sicherungsservers sichtbare Bedienelemente, wie insbesondere Druck-, Zug-, Dreh- oder Schiebe-Betätiger im Einsatz. Entsprechend ist kein Verbindungselement, kein Bedienelement oder keine Steck- oder Klemmverbindung sichtbar, mithilfe derer der Sicherungsserver offenbar ist. Anders formuliert ist die Außenseite an allen Seiten frei von derartigen Funktionselementen. Der Verriegelungsmechanismus arbeitet bevorzugt mit dem Prinzip eines Formschlusses.

Insbesondere umfasst der Sicherungsserver einen Kabeleinlass zur Verbindung mit Kabeln der Strom- und der Datenübertragung, wobei der Kabeleinlass in das Gehäuse flüssigkeitsdicht ist. Bevorzugt umfasst der Kabeleinlass einen gekapselten Bereich und der gekapselte Bereich ist mit einem Schaum geschäumt oder mit einem Kunststoff zumindest teilweise gefüllt. Der Kabeleinlass kann auch dadurch realisiert werden, dass Steckanschlüsse an der Gehäuseaußenseite angeordnet sind, wobei aber die Verbindung ins Gehäuseinnere flüssigkeitsdicht abgedichtet ist. Hierdurch wird die Dichtigkeit nicht reduziert.

Vorteilhaft ist ferner, wenn der Sicherungsserver quaderförmig ist und zwei gegenüberliegende größere Seiten umfasst, wobei im Gehäuseinneren, angrenzend an diese beiden größeren Seiten, jeweils ein Luftspalt angeordnet ist und zwischen den Luftspalten der zumindest eine Datenträger angeordnet ist. Somit ist der Datenträger im Inneren des Servers gut geschützt. Der Schutz bezieht sich auf elektromagnetische Einflüsse, wie auch auf mechanische Stöße, Feuchtigkeit oder dergleichen.

Insbesondere ist im Inneren des Sicherungsservers zumindest ein elektromagnetisch oder über Funk aktivierbares Verriegelungselement angeordnet. Dieses Verriegelungselement ist bevorzugt von außen nicht sichtbar. Ein elektromagnetisches Teil kann bspw. ein Reedschalter sein. Wenn das Gehäuse aus Edelstahl gefertigt ist, so kann man den Reedschalter mit einem einfachen Magneten aktivieren. Alternativ ist eine Funkfernbedienung denkbar, so dass sich das Verriegelungselement nach der Funkaktivierung öffnet.

Es kann bspw. lediglich ein Reedschalter vorgesehen sein, über den die Öffnungsvorrichtung über eine zeitliche Reihenfolge einer Mehrzahl von Aktivierungsbetätigungen aktivierbar ist. Dies kann bspw. über eine Art Morsecode geschehen, wobei eine einfache Steuerung, die insbesondere über einen Mikrokontroller eine richtige Eingabe erkennt. Auch kann eine Mehrzahl von Magnetsensoren vorgesehen sein, wie bspw. zwei und über eine Reihenfolge von Betätigungen kann dann die Öffnungsvorrichtung aktivierbar sein. Ein entsprechender Code kann sein, zuerst den "rechten" Reedschalter zu betätigen, dann den "linken" und danach noch einmal den rechten. Oder ein Reedschalter kann in einer zeitlichen Folge zweimal hintereinander zu bedienen sein.

Insbesondere kann zumindest ein motorisch angetriebener Hebel oder Schieber vorgesehen sein, den Deckel des Gehäuses in der geschlossenen Position zu halten. Diese Ausführung mit nur einem Hebel oder Schieber ist dann vorteilhaft, wenn der Deckel des Sicherungsservers mit einem Scharnier befestigt ist. Alternativ können bevorzugt zwei gegenüberliegend angeordnete motorisch angetriebene Hebel oder Schieber vorgesehen sein. Bei letzterer Ausführungsform kann der Deckel an zwei entfernten Stellen an das Gehäuseunterteil herangezogen werden, was eine gleichmäßige Flächenpressung und folglich eine sehr gute Dichtigkeit ermöglicht.

Der Begriff des "motorischen Antriebs" umfasst insbesondere einen elektromotorischen Antrieb, einen Linearmotor, einen Schrittmotor, einen Elektromotor oder Stellantrieb und/oder einen Schneckentrieb oder dergleichen. Optional kann zur Krafterhöhung, bzw. zur Erhöhung des Stellwegs des Motors (insbesondere der Motorumdrehungen) ein Getriebe zum Einsatz kommen.

Der Reedschalter oder die Reedschalter können abhängig von Gerät zu Gerät der gleichen Baureihe des Sicherungsservers an unterschiedlichen Stellen angebracht werden. Eine Bedienungsanweisung kann dann individuell für jedes Gerät ausgeführt sein und individuell den Servicemitarbeiter über den Ort der Lage des oder der Reedschalter informieren und über die benötigte Betätigungsreihenfolge.

Zudem kann der Sicherungsserver eine elektronische Steuereinheit umfassen, die eingerichtet ist, das Speichern der Daten vorzunehmen und den Sicherungsserver zu managen. Dabei umfasst der Sicherungsserver aber keine Programmierlogiken oder Einrichtungen, die eingerichtet sind, um Berechnungen oder logische Operationen mit den zu speichernden Informationen vorzunehmen. Hierdurch wird ausgedrückt, dass der Sicherungsserver ein Server ist, der ausschließlich für die Datensicherung zum Einsatz kommt.

Ferner kann der Sicherungsserver an zumindest einer Seite des Gehäuses zumindest eine Einrichtung, wie insbesondere lokale Reduzierungen der Wandstärke oder Durchbrüche durch die Gehäusewand umfassen, um hierüber den Sicherungsserver an einer Wand oder dem Boden eines Gebäudes zu befestigen, was einen effektiven Schutz gegen einen Diebstahl des Sicherungsservers bewirkt.

Nachfolgend werden bevorzugte Ausführungsformen der Erfindung beispielhaft erläutert. Es zeigen:
- Fig. 1: eine schematische Darstellung eines erfindungsgemäßen Sicherungsserver ohne einen darin aufgenommenen Einsatz 60, der die wesentlichen elektronischen Komponenten beinhaltet,
- Fig. 2: eine Darstellung des erfindungsgemäßen Sicherungsservers, wobei das Gehäuse des Servers ausgeblendet ist und nur die im Inneren des Servers enthaltenen Komponenten gezeigt sind,
- Fig. 3: eine seitliche Ansicht in das Innere des Sicherungsservers und
- Fig. 4: zeigt die Darstellung der Fig. 3 in einer um 90° gedrehten Ansicht.

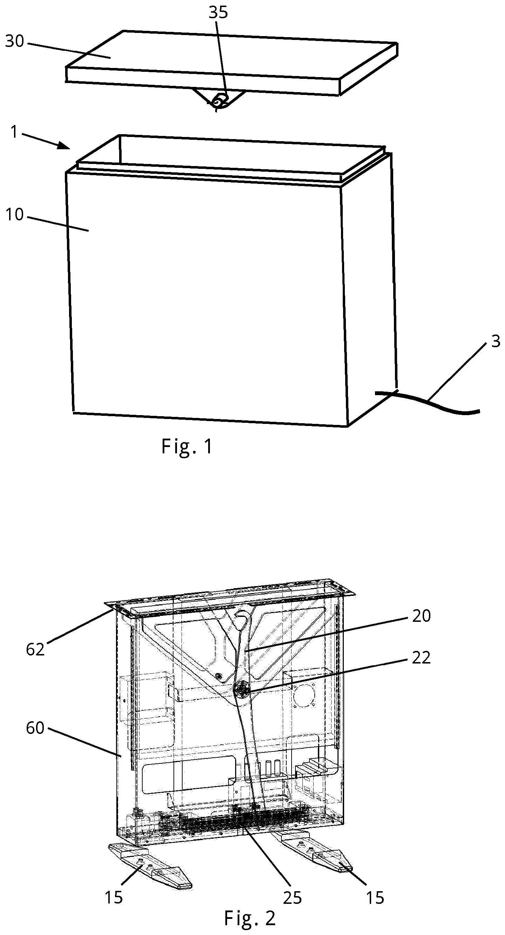

Der Sicherungsserver 10, wie er in Fig. 1 gezeigt ist, umfasst ein solides Gehäuse 10, 30, das frei von Öffnungen, Bedienteilen oder Anzeigen ist. Bevorzugt kommen keine Lüftungsöffnungen zum Einsatz. Das Gehäuse 10, 30 umfasst ein Gehäuseunterteil 10 und ein oberes Gehäuseteil 30, das auch als Deckel bezeichnet werden kann. Das Gehäuseunterteil 10 ist aus fünf Blechteilen gefertigt, wobei diese Teile miteinander verlötet oder verschweißt sind. In alternativen Ausführungsformen können auch gebogene Teile zum Einsatz kommen. Relevant ist hierbei, dass die Verbindungen der einzelnen Komponenten des Gehäuseunterteils 10 flüssigkeitsdicht ausgeführt sind. An einem unteren Bereich des Gehäuseunterteils 10 ist ein Kabeleinlass 3 vorgesehen. Der Kabeleinlass 3 ist gegen die Umgebung flüssigkeitsdicht abgedichtet. Die Dichtigkeit wird bspw. dadurch gewährleistet, dass im Inneren des Gehäuses beim Kabeleinlass 3 eine Abdeckung (nicht gezeigt) angeordnet wird und nachfolgend das sich darüber ergebende Volumen mit einem Schaum ausgefüllt wird. Alternativ kann auch ein fließfähiger Kunststoff/-harz zum Einsatz kommen. Bei dem Kabeleinlass 3 werden zumindest ein Datenkabel und ein weiteres Kabel für die Spannungsversorgung verwendet. Alternativ zu den unentfernbar angebrachten Kabeln können auch Steckverbinder vorgesehen sein, an denen entsprechende Kabel eingesteckt werden können. Diese Steckverbinder sind dann aber bevorzugt gegenüber dem Inneren des Gehäuses flüssigkeitsdicht abgedichtet. Auf diese Weise wird ein flüssigkeitsdichter Behälter 10 geschaffen. Wenn bspw. in einem Bürogebäude eine Überflutung, wie durch Wasserschaden oder Löschwasser entsteht, so kann kein schädliches Wasser in das Geräteinnere gelangen und die dort enthaltene Elektronik schädigen. Das Gehäuseunterteil 10 wird von oben durch einen Deckel 30 abgedeckt. Der Deckel 30 weist einen nach unten weisenden Rand auf, der in einer Aufnahme des unteren Gehäuseteils 10 aufgenommen wird, so dass der Deckel 30 unverschiebbar auf dem Gehäuseunterteil 10 ruhen kann. Zudem kommt bevorzugt eine Dichtung zum Einsatz, was die Dichtigkeit des Behälters verbessert. In dem Gehäuseunterteil 10 kann ein Einsatz 60 aufgenommen werden, wobei dieser Einsatz 60 wiederum diverse elektronische Komponenten aufnimmt, nämlich einen Datenträger 40 und insbesondere eine Notstromversorgung 50. Diese Komponenten werden elektrisch mit dem Kabeleinlass verbunden und um die Entnehmbarkeit des Einsatzes zu gewährleisten, ist unterhalb des Einsatzes ein freier Bereich für entsprechende Kabel vorgesehen.

Bei dem Datenträger 40 handelt es sich bevorzugt um einen standardmäßig erhältlichen Sicherungsserver oder Backup-Server, wie er üblicherweise in Racks eines Schaltschranks eingebaut werden kann und seinerseits eine Mehrzahl von Festplatten umfassen kann und eine Steuerungslogik, die die Daten automatisch und redundant speichert. Bei der Notstromversorgung 50, die optional ist, handelt es sich bevorzugt um eine Mehrzahl von Akkus, um den Betrieb des Backupservers im Fall eines Stromausfalls für mehrere Stunden sicherstellen zu können. Der Sicherungsserver kann eingerichtet sein, unabhängig von einer Stromzufuhr ein Komplettbackup zu erstellen. Dabei kann er bevorzugt auch den zu sichernden Server bei Stromausfall mitversorgen.

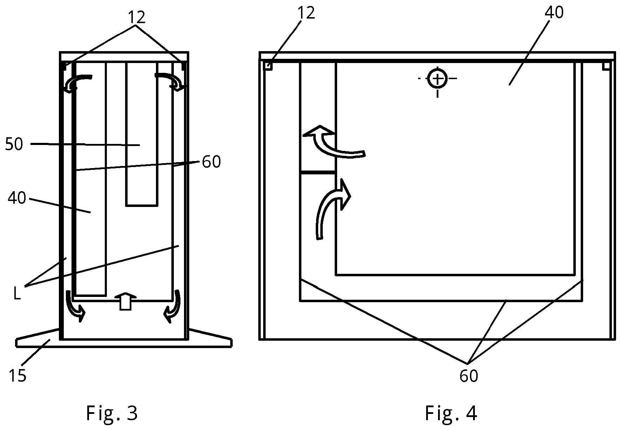

In Fig. 2 ist der Backupserver 1 gezeigt, wobei in dieser Ansicht aber das Gehäuse 10, 30 ausgeblendet ist. Entsprechend sieht man den Einsatz 60, der an seinem oberen Ende einen (umlaufenden) Flansch 62 umfasst, der an Anschlägen 12 (siehe Fig. 3 oder 4) des Gehäuses 10 anliegen kann. In den Figuren 3 und 4 ist die Lage des Einsatzes 60 im Inneren des Gehäuseunterteils 10 gezeigt. Aus Fig. 3 ist ersichtlich, dass der Einsatz mit Abständen zur Gehäusewand hängt und sich dazwischen ein Luftspalt L ergibt. Entsprechend Abstände von dem Einsatz sind in der um 90° gedrehten Ansicht vonFig. 4 gezeigt, wobei diese Abstände aber optional sind. In dem Inneren des Einsatzes sind, wie bereits erwähnt, elektronische Komponenten angeordnet. Dies ist bevorzugt der Datenträger 40 und eine Notstromversorgung 50. Für diese Komponenten ist eine Kühlung vorgesehen, wie es sich über die Pfeile der Luftbewegung der Fig. 3 und 4 ergibt. Bspw. ist im unteren Bereich des Gehäuseunterteils 10 ein Gebläse (nicht dargestellt) vorgesehen, mit welchem ein nach oben gerichteter Luftstrom durch Durchbrüche in den Einsatz 60 gefördert wird. Die im Einsatz 60 enthaltenen Komponenten umfassen selbst einen Kühlweg mit einem Einlass und einem Auslass, so dass der mit den Pfeilen der Fig. 4 skizierte Kühlkreis für den Datenträger 40 erzeugt werden kann. Die so im Datenträger 40 erwärmte Luft wird wieder in den Einsatz 60 freigegeben. Durch Freimachungen im oberen Bereich des Einsatzes 60 gelangt die Kühlluft in den Luftspalt zwischen dem unteren Teil des Gehäuses 10 und dem Einsatz 60. Dort kühlt die Luft sich am Gehäuse ab und wird weiter nach unten, also unter den Einsatz 60 geleitet und von dort wieder in den Einsatz 60. Allgemein gesprochen, wird für einen geschlossenen Kühlkreis gesorgt. Der Kühlkreis hat keinen Luftaustausch mit der Umgebung. Der Luftspalt L muss nicht, wie gezeigt, durch einen durchgehenden Spalt realisiert werden, sondern es können lokal Kontaktbereiche von dem Einsatz mit dem Gehäuseunterteil 10 bestehen, was zum einen die mechanische Stabilität erhöht und zum anderen einen Wärmefluss durch das Material ermöglicht. Auch kann der Luftspalt L durch eine Mehrzahl von senkrecht ausgerichteten Kühlkanälen realisiert werden. Aufgrund dieser Anordnung ist die empfindliche Elektronik mittig im Gehäuse angeordnet und durch den Einsatz 60 und das Gehäuse 10, 30 doppelt ummantelt, was eine Erhöhung Sicherheit der Elektronik gegen elektromagnetische Störimpulse bewirkt. Durch die Aufhängung der Elektronik in dem Einsatz 60 kann ein Schutz gegen mechanische Einflüsse, wie z.B. Stöße erzielt werden. Zwei Ständer 15, können dafür sorgen, dass im Fall, wenn der Sicherungsserver nicht am Gebäude verschraubt ist, eine ausreichende Standfestigkeit hat.

In einer alternativen Ausführungsform der Befestigung des Einsatzes 60 kann dieser unmittelbar, also mit Kontakt, und bevorzugt einem flächigen Kontakt, an einer der Seiten des Gehäuseunterteils 10 angeordnet sein, bzw. über Federkraft dort angedrückt werden. Diese Ausführungsform kann vorteilhaft sein, da so ein besserer Abtransport der Dissipationswärme, ermöglicht wird.

In einer alternativen Ausführungsform der Erfindung kann der Luftzyklus umgekehrt ausgerichtet werden, so dass die relativ kühle Kühlluft von oben in die Elektronik 40 eingeblasen wird.

Fig. 2 zeigt einen Hebel 20, der über einen Drehpunkt 22 geschwenkt werden kann. Dazu ist im unteren Innenraum des Gehäuseunterteils 10 ein motorischer Stellantrieb 25 angeordnet, so dass eine Schwenkbewegung in eine öffnende und eine schließende Stellung möglich ist. Dazu umfasst das obere Ende des Hebels 20 einen Haken, der in einen Haltebolzen 35 des Deckels eingreifen kann. Auch wenn in Fig. 2 nur ein derartiger Hebel 20 gezeigt ist, ist bevorzugt an der gegenüberliegenden Seite des Gehäuses 10, 30 eine identische Konstruktion angeordnet. Der Haken hat eine Gleitfläche, die beim Gleiten oder Rollen des Haltebolzens 35 eine vertikal ausgerichtete Haltekraft bewirkt. So wird eine spielfreie Befestigung des Deckels ermöglicht und der Deckel widersteht einer Öffnungskraft von einigen 100 kg.

Das Gehäuse wird bevorzugt aus einem dicken Edelstahlblech gefertigt, dessen Dicke bevorzugt mindestens 2 mm und insbesondere 3 mm +/-0,5 mm beträgt.

Aufgrund des Fehlens jeglicher sichtbarer Komponenten, mit denen der Sicherungsserver geöffnet werden kann, erhöht sich die Datensicherheit, da ein möglicher Datendieb nur mit brutaler Gewalt, wie z.B. aufflexen, an das Innere gelangen kann. Dies benötigt Zeit und verursacht Lärm. Hierdurch lässt sich mutmaßlich ein nennenswerter Anteil der Datendiebe abhalten. Für Personen, die kein Interesse an den Daten haben und lediglich die Hardware des Servers weiterverkaufen wollen, hat der hier beschriebene Server keinen Wert, da diese Personen den Server zunächst für eine Umprogrammierung öffnen müssten, was, wie beschrieben, ohne eine Zerstörung nicht möglich ist.

Als eine weitere Sicherung kann der Sicherungsserver am Gebäude festgeschraubt werden, wobei die Schraubverbindungen nur bei einem geöffneten Deckel 30 erreichbar sind. Hierfür kann der Sicherungsserver mit Sacklochbohrungen einer deutlichen Reduzierung der Wandstärke im unteren Bereich versehen sein. Der Anwender muss die verbleibende Restwandstärke durchstoßen und kann dann über die so erhaltene(n) Öffnung(en) den Sicherungsserver verschrauben. Auch können durchgehende Bohrungen werkseitig im Gehäuse vorgesehen sein, die dann flüssigkeitsdicht z.B. mit einem Pfropfen verschlossen ausgeliefert werden. Diese Bohrungen können an der Unterseite des Gehäuses 10 und/oder an den Seitenwänden vorgesehen sein.

Der Sicherungsserver bzw. Backup Server kann bevorzugt große Datenmengen, wie 150 GB in weniger als 20 Minuten speichern und insbesondere für eine inkrementelle Speicherung weniger als 10 Sekunden, bevorzugt 2 bis 7 Sekunden, brauchen.

Der Sicherungsserver kann Software enthalten, um ein Image eines zu sichernden Servers oder Rechners durchzuführen. Dies kann insbesondere sämtliche Betriebssoftware, den gesamten Emailverkehr, Bilddateien, Rechenprogramme und/oder selbsterstellter Anwenderprogramme umfassen.

Das Gehäuse wird bevorzugt in einer Tower-PC-Gestalt ausgeführt. Die Maße sind dabei in manchen Ausführungsformen folgendermaßen: Breite kleiner 40 cm, bevorzugt kleiner 30 cm, Höhe kleiner 90 cm, bevorzugt kleiner 80 cm und/oder Tiefe kleiner 90 cm, bevorzugt kleiner 80 cm. Bei diesen Maßen wird sichergestellt, dass der Sicherungsserver in einem Standardbüro verwendet werden kann. Aufgrund des Fehlens von Öffnungen in der Verbindung mit einer hohen Wandstärke des Gehäuses wird sichergestellt, dass der Sicherungsserver nahezu geräuschlos arbeitet. Die hohe Wandstärke des Gehäuses schützt auch gegen eine magnetische Einstrahlung. Das Innenvolumen für die notwendigen Komponenten kann bei einer bevorzugten Ausführungsform bis zu 50 l betragen. Entsprechend kann das

Außenvolumen bevorzugt bis zu 100 l betragen.

Das Speichervolumen des Datenträgers 40 kann bspw. bis zu 128 TB betragen. Dies entspricht in etwa dem Datenvolumen der Speicherung von mindestens 36 Monatsendständen und mindestens 3 Jahresendständen bei einer Firma, wie einer Kanzlei, Praxis oder Agentur, mit bis zu 20 Arbeitsplätzen. Mindestens beträgt das Speichervolumen 20 TB, da bei vielen Einsatzbereichen erst ab dieser Größenordnung der Aufwand eines speziell gesicherten Servers als angebracht angesehen wird. Zudem ist es möglich, bei Bedarf sowohl einen Netzwerkserver und zusätzlich jeden Arbeitsplatz direkt zu sichern.

Auch kann der Sicherungsserver 10 mit drahtlosen Kommunikationsmitteln versehen werden, wie bspw. WLAN, UMTS, LTE. So ist es möglich, von entfernten Rechnern bzw. Workstations, Sicherungskopien zu empfangen und dorthin zu senden. Allerdings gelten dann die üblichen Allgemeinrisiken der Datenübertragung (Abgriff, Störung, Verfälschung). Die vorstehend genannten bevorzugten Eigenschaften können jede für sich, in einer Kombination einzelner oder in einer Kombination aller genannten Merkmale zum Einsatz kommen.

Bezugszeichen:
- 1: Sicherungsserver
- 3: Kabeleinlass
- 10: Gehäuseunterteil
- 12: Anschlag
- 15: Ständer
- 20: Hebel, Klemmhebel
- 22: Drehpunkt
- 25: motorischer Antrieb mit Getriebe, Öffnungsvorrichtung
- 30: oberes Gehäuse, Deckel
- 35: Haltebolzen
- 40: Datenträger
- 50: Notstromversorgung
- 60: Einsatz
- 62: Flansch vom Einsatz
- L: Luftspalt

## Patentansprüche

1. Sicherungsserver (1) zum Sichern von Daten mit zumindest einem Datenträger (40), auf dem die Daten speicherbar und abrufbar sind und bevorzugt mit einem Energiespeicher (50) zum Speichern von elektrischer Energie für den Fall einer Unterbrechung der Stromversorgung,
wobei der Sicherungsserver (1) ein Gehäuse (10, 30) umfasst, welches an einer Seite, bevorzugt der Oberseite, einen öffenbaren Deckel (30) aufweist, und die anderen Seiten flüssigkeitsdicht und bevorzugt untrennbar miteinander verbunden sind, **dadurch gekennzeichnet, dass**
im Inneren des Sicherungsservers (1) zumindest ein magnetisch oder über Funk aktivierbares Verriegelungselement (20, 35) angeordnet ist.

2. Sicherungsserver (1) gemäß Anspruch 1, **dadurch gekennzeichnet, dass** der Sicherungsserver (1) keine Bedienelemente, wie Ein- oder Ausschaltbetätiger umfasst, die an einer Außenseite des Sicherungsservers (1) angeordnet sind.

3. Sicherungsserver (1) gemäß Anspruch 1 oder 2, **dadurch gekennzeichnet, dass** der Sicherungsserver einen Verriegelungsmechanismus (20, 35) umfasst, um den Deckel (30) in einer verriegelnden Position zu halten,
wobei der Verriegelungsmechanismus (20, 35) keine an der Außenseite des Sicherungsservers (1) sichtbaren Verbindungselemente, wie insbesondere Schrauben, Haken aufweist,
sowie keine an der Außenseite des Sicherungsservers sichtbaren Bedienelemente, wie insbesondere Druck-, Zug-, Dreh- oder Schiebe-Betätiger aufweist
und ferner keine an der Außenseite des Sicherungsservers sichtbaren Steck- bzw. Klemmverbindungen aufweist;
mithilfe derer der Sicherungsserver öffenbar ist.

4. Sicherungsserver (1) gemäß einem der vorangegangenen Ansprüche, **dadurch gekennzeichnet, dass** der Sicherungsserver (1) einen Kabeleinlass (3) zur Verbindung mit Kabeln der Strom- und der Datenübertragung umfasst, wobei der Kabeleinlass (30) in das Gehäuse (10, 30) flüssigkeitsdicht ist, wobei insbesondere der Kabeleinlass (3) einen gekapselten Bereich umfasst und der gekapselte Bereich mit einem Schaum geschäumt oder mit einem Kunststoff zumindest teilweise gefüllt ist.

5. Sicherungsserver (1) gemäß einem der vorangegangenen Ansprüche, **dadurch gekennzeichnet, dass** der Sicherungsserver (1) quaderförmig ist und zwei gegenüberliegende größere Seiten umfasst, wobei im Gehäuseinneren angrenzend an diese beiden größeren Seiten jeweils ein Luftspalt (L) angeordnet ist und zwischen den Luftspalten (L) der zumindest eine Datenträger (40) angeordnet ist.

6. Sicherungsserver (1) gemäß einem der vorangegangenen Ansprüche, **dadurch gekennzeichnet, dass** der Sicherungsserver (1) eine Öffnungsvorrichtung (25) umfasst und ferner entweder
einen Magnetsensor, wie insbesondere einen Reedschalter, umfasst, über den über eine zeitliche Reihenfolge einer Mehrzahl von Aktivierungsbetätigungen die Öffnungsvorrichtung (25) aktivierbar ist
oder
eine Mehrzahl von Magnetsensoren umfasst, über die über eine Reihenfolge von Betätigungen die Öffnungsvorrichtung (25) aktivierbar ist.

7. Sicherungsserver (1) gemäß einem der vorangegangenen Ansprüche, **dadurch gekennzeichnet, dass** zumindest ein motorisch angetriebener Hebel (20) oder Schieber vorgesehen ist, den Deckel (30) des Gehäuses in der geschlossenen Position zu halten, wobei bevorzugt zwei gegenüberliegend angeordnete motorisch angetriebene Hebel (20) oder Schieber vorgesehen sind.

8. Sicherungsserver (1) gemäß einem der vorangegangenen Ansprüche, **dadurch gekennzeichnet, dass** der Sicherungsserver (1) eine elektronische Steuereinheit umfasst, die eingerichtet ist, um das Speichern der Daten vorzunehmen und den Sicherungsserver zu managen, wobei der Sicherungsserver (1) keine Programmierlogiken oder Einrichtungen umfasst, die eingerichtet sind, um Berechnungen oder logische Operationen mit den zu speichernden Informationen vorzunehmen.

9. Sicherungsserver (1) gemäß einem der vorangegangenen Ansprüche, **dadurch gekennzeichnet, dass** der Sicherungsserver (1) an zumindest einer Seite des Gehäuses (10, 30) zumindest eine Einrichtung, wie insbesondere lokale Reduzierungen der Wandstärke oder Durchbrüche durch die Gehäusewand umfasst, um hierüber den Sicherungsserver (1) an einer Wand oder dem Boden eines Gebäudes zu befestigen.

## Claims

1. Backup server (1) for backing up data with at least one data storage medium (40), on which the data can be stored and from which they can called up, and preferably with an energy storage device (50) for storing electrical energy for the case in which the power supply is interrupted,
wherein the backup server (1) comprises a housing (10, 30), which has an openable cover (30) on one side, preferably on the top, and wherein the other sides are connected to each other in a liquid-tight and preferably inseparable manner,
**characterized in that**
at least one locking element (20, 35), which can be activated magnetically or by radio, is arranged in the interior of the backup server (1).

2. Backup server (1) according to claim 1, **characterized in that** the backup server (1) comprises no operating elements such as on or off-actuators arranged on an external surface of the backup server (1).

3. Backup server (1) according to claim 1 or claim 2, **characterized in that** the backup server comprises a locking mechanism (20, 35) to keep the cover (30) in a locking position,
wherein the locking mechanism (20, 35) comprises no connecting elements such as in particular screws or hooks which are visible on the external surface of the backup server (1),
and comprises no operating elements such as in particular push, pull, turn, or slide actuators which are visible on the external surface of the backup server,
and also comprises no plug-in or terminal connections visible on the outside surface of the backup server,
by means of which the backup server can be opened.

4. Backup server (1) according to one of the preceding claims, **characterized in that** the backup server (1) comprises a cable inlet (3) for establishing connections with power and data transmission cables, wherein the cable inlet (30) is arranged in the housing (10, 30) in a liquid-tight manner, wherein the cable inlet (30) in particular comprises an encapsulated area, and the encapsulated area is foam-filled or at least partially filled with a plastic.

5. Backup server (1) according to one of the preceding claims, **characterized in that** the backup server (1) has a rectangular block shape with two larger opposite sides, wherein, in the interior of the housing, an air gap (L) is arranged adjacent to each of these two larger sides, and the at least one data storage medium (40) is arranged between the air gaps (L).

6. Backup server (1) according to one of the preceding claims, **characterized in that** the backup server (1) comprises an opening device (25) and also either
a magnetic sensor, such as in particular a reed switch, by means of which the opening device (25) can be activated by a temporal sequence of a plurality of activating actuations,
or
comprises a plurality of magnetic sensors, by means of which the opening device (25) can be activated by a sequence of actuations.

7. Backup server (1) according to one of the preceding claims, **characterized in that** at least one motor-driven lever (20) or slide is provided to hold the cover (30) of the housing in the closed position, wherein preferably two oppositely arranged motor-driven levers (20) or slides are provided.

8. Backup server (1) according to one of the preceding claims, **characterized in that** the backup server (1) comprises an electronic control unit, which is set up to handle the storing of the data and to manage the backup server, wherein the backup server (1) comprises no programmable logic controllers or devices which are set up to carry out calculations or logical operations on the data to be stored.

9. Backup server (1) according to one of the preceding claims, **characterized in that** the backup server (1) comprises, on at least one side of the housing (10, 30), at least one feature such as in particular areas of locally reduced wall thickness or openings through the housing wall by means of which the backup server (10) can be fastened to a wall or to the floor of a building.

## Revendications

1. Serveur de sauvegarde (1) pour sauvegarder des données comportant au moins un support de données (40) sur lequel les données peuvent être mémorisées et récupérées et de préférence comportant une réserve d'énergie (50) pour stocker l'énergie électrique en cas de coupure de l'alimentation électrique, dans lequel le serveur de sauvegarde (1) comprend un boîtier (10, 30) qui est relié à un côté, de préférence le côté supérieur, présente un couvercle ouvrable (30), et les autres côtés sont étanches aux liquides et de préférence inséparablement reliés les uns aux autres, **caractérisé en ce qu'**à l'intérieur du serveur de sécurité (1) au moins un élément de verrouillage activé magnétiquement ou sans fil (20, 35) est disposé.

2. Serveur de sauvegarde (1) selon la revendication 1, **caractérisé en ce que** le serveur de sauvegarde (1) ne comprend aucun élément de fonctionnement, tel que des actionneurs de marche ou arrêt, qui sont disposés à l'extérieur du serveur de sauvegarde (1).

3. Serveur de sauvegarde (1) selon la revendication 1 ou 2, **caractérisé en ce que** le serveur de sauvegarde comprend un mécanisme de verrouillage (20, 35) pour maintenir le couvercle (30) en position de verrouillage, dans lequel le mécanisme de verrouillage (20, 35) ne présente aucun élément de raccordement visible à l'extérieur du serveur de sauvegarde (1), tels que notamment des vis, des crochets, ainsi que d'aucun élément de fonctionnement visible à l'extérieur du serveur de sauvegarde, comme notamment un actionneur par pression, traction, rotation ou coulissement, et en outre ne présente aucune fiche ou prise visible à l'extérieur du serveur de sauvegarde, à l'aide de laquelle le serveur de sauvegarde peut être ouvert.

4. Serveur de sauvegarde (1) selon une quelconque des revendications précédentes, **caractérisé en ce que** le serveur de sauvegarde (1) comprend une entrée de câble (3) pour la connexion à des câbles d'alimentation et de transmission de données, dans lequel l'entrée de câble (30) dans le boîtier (10, 30) est étanche aux liquides, dans lequel en particulier, l'entrée de câble (3) comprend une zone encapsulée et la zone encapsulée est moussée avec une mousse ou au moins partiellement remplie d'une matière plastique.

5. Serveur de sauvegarde (1) selon une des revendications précédentes, **caractérisé en ce que** le serveur de sauvegarde (1) est parallélépipédique et comprend deux grands côtés opposés, dans lequel un entrefer (L) est disposé à l'intérieur du boîtier adjacent à ces deux côtés plus grands et entre les entrefers (L) au moins un support de données (40) est disposé.

6. Serveur de sauvegarde (1) selon une quelconque des revendications précédentes, **caractérisé en ce que** le serveur de sauvegarde (1) comprend un dispositif d'ouverture (25) et en outre soit comprend un capteur magnétique, tel que notamment un interrupteur Reed, par lequel le dispositif d'ouverture (25) peut être activé, soit comprend une pluralité de capteurs magnétiques, via lesquels le dispositif d'ouverture (25) peut être activé via une séquence d'actionnements.

7. Serveur de sauvegarde (1) selon une des revendications précédentes, **caractérisé en ce qu'**au moins un levier motorisé (20) ou une glissière est prévu, pour maintenir le couvercle (30) du boîtier en position fermée, de préférence deux leviers motorisés (20) ou glissières disposés de manière opposée sont prévus.

8. Serveur de sauvegarde (1) selon une quelconque des revendications précédentes, **caractérisé en ce que** le serveur de sauvegarde (1) comprend une unité de commande électronique qui est conçue pour stocker les données et gérer le serveur de sauvegarde, dans lequel le serveur de sauvegarde (1) ne comprend aucune logique de programmation ou des dispositifs, qui sont agencés pour effectuer des calculs ou des opérations logiques avec les informations à mémoriser.

9. Serveur de sauvegarde (1) selon une des revendications précédentes, **caractérisé en ce que** le serveur de sauvegarde (1) comprend sur au moins un côté du boîtier (10, 30) au moins un dispositif, tel que notamment des réductions d'épaisseur de paroi locales ou des ouvertures à travers la paroi du boîtier afin de fixer le serveur de sécurité (1) à un mur ou au sol d'un bâtiment.
